# EUROPÄISCHE PATENTSCHRIFT

(11) **EP 2 416 979 B1**
(45) Veröffentlichungstag und Bekanntmachung des Hinweises auf die Patenterteilung: **24.07.2013**
(21) Anmeldenummer: 10708207.5
(22) Anmeldetag: 12.03.2010
(51) Int. Cl.: B60K 17/344, F16H 1/22

(54) **WINKELTRIEBANORDNUNG**
ANGULAR DRIVE ARRANGEMENT
AGENCEMENT DE RENVOI ANGULAIRE

(30) Priorität: 12.03.2009 DE 102009012463
(43) Veröffentlichungstag der Anmeldung: 15.02.2012
(73) Patentinhaber: GKN Driveline International GmbH, 53797 Lohmar (DE)
(72) Erfinder: SCHWEKUTSCH, Michael, 42929 Wermelskirchen (DE); GASSMANN, Theodor, 53721 Siegburg (DE)
(74) Vertreter: Oberwalleney, Stephan
(86) Internationale Anmeldenummer: PCT/EP2010/053177
(87) Internationale Veröffentlichungsnummer: WO 2010/103101

(56) Entgegenhaltungen:
- EP-A2- 0 282 346
- FR-A1- 2 588 634
- US-A- 4 745 819

## Beschreibung

Die Erfindung betrifft eine Winkeltriebanordnung mit einer Eingangswelle, die in einem Getriebegehäuse um eine erste Achse drehbar gelagert ist, und mit einer Ausgangswelle, die in dem Getriebegehäuse um eine zweite Achse drehbar gelagert ist, wobei die zweite Achse zur ersten Achse senkrecht verläuft. Winkeltriebanordnungen der genannten Art werden insbesondere bei Kraftfahrzeugen mit quer eingebautem Frontmotor eingesetzt, die mit einem Allradantrieb ausgestattet sind. Solche Fahrzeugvarianten mit Allradantrieb sind oft von Grundmodellen hergeleitet, die nur Frontantrieb aufweisen. Dabei schließt die Winkeltriebanordnung unmittelbar an ein Differentialgetriebe der Vorderachse des Kraftfahrzeugs an, wobei eine feste Kopplung der Eingangswelle der Winkeltriebanordnung mit dem Differentialkorb des Differentialgetriebes vorgesehen ist. Hierbei ist die Eingangswelle der Winkeltriebanordnung als Hohlwelle ausgebildet, durch die eine der Seitenwellen des Differentialgetriebes hindurchgeführt ist.

Aus der EP 0 282 346 A2 ist ein Antriebsstrang mit einer Doppeldifferentialanordnung mit einem Mittendifferential und einem Vorderachsdifferential bekannt. Mit dem Antriebsstrang werden beide Achsen permanent angetrieben, und zwar die Vorderachse über das Vorderachsdifferential und die Hinterachse über einen Winkeltrieb, welche mit dem Mittendifferential antriebsverbunden ist. Die Drehmomentverteilung wird mittels des Mittendifferentials bewerkstelligt. Hierfür ist ein Seitenwellenrad des Mittendifferentials drehfest mit dem Trägerelement des Winkeltriebs verbunden. Zwischen dem Kupplungskorb und einer Seitenwelle des Mittendifferentials ist eine Kupplung vorgesehen, die zum Sperren des Mittendifferentials dient.

Aus der US 4 420 059 ist eine Antriebsanordnung für ein Kraftfahrzeug bekannt mit einem Verteilergetriebe zum Aufteilen eines Drehmoments auf die Vorderräder bzw. Hinterräder sowie mit einer Differentialanordnung und einem Winkeltrieb. Zwischen der Differentialanordnung und dem Winkeltrieb ist eine Kupplung vorgesehen, die den Differentialkorb mit dem Eingangsrad des Winkeltriebs antriebsmäßig verbinden kann. Das Eingangsrad des Winkeltriebs ist mittels eines Lagers in einem Gehäuse gelagert, das benachbart zur Kupplung angeordnet ist.

Aus der DE 4 745 819 ist ein Vorderachsdifferentialgetriebe und ein Mittendifferentialgetriebe für ein vierradgetriebenes Kraftfahrzeug bekannt. Das Mittendifferential wird permanent über ein Tellerradgehäuse vom Motor angetrieben. Am Vorderachsdifferential ist eine hydraulische Lamellenkupplung vorgesehen, die einen Sperrmechanismus zum Sperren des Mittendifferentials bildet. In gesperrtem Zustand ist eine Ausgleichsbewebung zwischen der Vorderachse und der Hinterachse blockiert. In geöffnetem Zustand kann eine Ausgleichsbewegung zwischen der Vorderachse und der Hinterachse erfolgen.

Aus der EP 0 091 406 A2 ist eine Getriebeanordnung für ein Kraftfahrzeug mit quer eingebautem Motor bekannt. Die Getriebeanordnung umfaßt ein Planetengetriebe und ein diesem nachgeschaltetes Differentialgetriebe. Es ist eine Synchronisiereinrichtung vorgesehen zum bedarfsweisen Sperren und Freigeben des Planetengetriebes.

Aus der DE 100 65 108 A1 ist ein Winkelgetriebe mit einem Getriebegehäuse bekannt, das eine erste Achse und eine hierzu radiale zweite Achse definiert. Das Getriebegehäuse ist ringförmig gestaltet und umfaßt einen Hülsenansatz, in dem die Ausgangswelle des Winkeltriebs drehbar gelagert ist.

Es ist ferner bekannt, bei Kraftfahrzeugen mit permanent angetriebener Vorderachse und bedarfsweise zuschaltbarer Hinterachse, die Längsantriebswelle in abgeschaltetem Zustand vollständig von der Vorderachse und der Hinterachse abzukoppeln, so daß diese stillsteht. Auf diese Weise lassen sich Leistungsverluste, die sonst aufgrund des drehmomentfreien Mitlaufens der Längsantriebswelle entstehen, minimieren, was sich wiederum günstig auf den Kraftstoffverbrauch des Kraftfahrzeugs auswirkt.

Aus der DE 10 2008 037 886 A1 ist eine Antriebsanordnung für ein mehrachsgetriebenes Kraftfahrzeug bekannt mit einer permanent angetriebenen ersten Antriebsachse und einer zuschaltbaren zweiten Antriebsachse. Die Drehmomentübertragung auf die zweite Antriebsachse erfolgt über eine Längsantriebswelle. Zum An- und Abkoppeln der Längsantriebswelle sind zwei Kupplungen vorgesehen, von denen eine im Drehmomentfluß vor, und die andere im Drehmomentfluß hinter der Längsantriebswelle angeordnet ist.

Gerade das vordere Winkelgetriebe, das zwischen dem Vorderachsdifferential und der Längsantriebswelle hinter bzw. unter dem Verbrennungsmotor unterzubringen ist, ist in seinem Bauraum stark eingeschränkt. Dies gilt um so mehr für einen Antriebsstrang, bei dem die Längsantriebswelle mittels einer Schaltkupplung abschaltbar sein soll. Der Möglichkeit einer Vergrößerung Winkelgetriebes steht der begrenzte Bauraum entgegen.

Hiervon ausgehend liegt der vorliegenden Erfindung die Aufgabe zugrunde, eine Winkeltriebanordnung zu schaffen, die eine Abschaltung der im Drehmomentfluß dahinterliegenden Antriebskomponenten ermöglicht und gleichzeitig kompakt aufgebaut ist.

Die Lösung besteht in einer Winkeltriebanordnung für den Antriebsstrang eines Kraftfahrzeugs mit einer permanent antreibbaren ersten Antriebsachse und einer zuschaltbaren zweiten Antriebsachse, umfassend eine Seitenwelle mit einer ersten Drehachse; eine Eingangswelle, die koaxial zur Seitenwelle angeordnet ist und um die erste Drehachse A1 drehend antreibbar ist; eine Zwischenwelle, die mittels erster und zweiter Lagermittel um die erste Drehachse in einem Gehäuse drehbar gelagert ist; eine zur ersten Drehachse A1 koaxial angeordnete Schaltkupplung mit einem Kupplungseingangsteil, das mit der Eingangswelle verbunden ist, und einem Kupplungsausgangsteil, das mit der Zwischenwelle verbunden ist, wobei das Kupplungseingangsteil und das Kupplungsausgangsteil zur Übertragung eines Drehmoments auf die zweite Antriebsachse miteinander koppelbar sind; ein Winkelgetriebe mit einem Tellerrad, das mit der Zwischenwelle fest verbunden ist und koaxial zur ersten Drehachse A1 angeordnet ist, und einem Ritzel, das um eine zweite Drehachse A2 drehbar gelagert ist und mit dem Tellerrad in Verzahnungseingriff ist, wobei die zweite Drehachse A2 rechtwinklig zur ersten Drehachse A1 angeordnet ist; wobei die ersten und zweiten Lagermittel in Bezug auf die zweite Drehachse A2 und in Bezug auf das Tellerrad auf einer gemeinsamen Seite angeordnet sind und wobei die Schaltkupplung und zumindest eines der ersten und zweiten Lagermittel auf unterschiedlichen Seiten des Tellerrads angeordnet sind.

Der Vorteil besteht darin, daß die Winkeltriebanordnung einen kompakten Aufbau hat und sich somit einfach in bestehende Bauraumverhältnisse von Kraftfahrzeugen mit quer eingebautem Motor integrieren läßt. Dadurch, daß beide Lagermittel zur Lagerung der Zwischenwelle auf einer Seite in Bezug auf eine Ebene, die senkrecht auf der ersten Drehachse A1 steht und die zweite Drehachse beinhaltet, angeordnet sind, kann der radiale Bauraum des Winkeltriebs im Bereich der Kupplung klein gehalten werden. Zu einem symmetrischen und insofern kompakten Aufbau trägt auch bei, daß die Schaltkupplung und zumindest eines der ersten und zweiten Lagermittel auf unterschiedlichen Seiten des Tellerrads angeordnet sind. Dies beinhaltet als eine erste Möglichkeit, daß die Schaltkupplung auf der einen und beide Lagermittel auf der anderen Seite des Tellerrads angeordnet sind. Als zweite Möglichkeit sind die Schaltkupplung und die einen Lagermittel auf der einen Seite und die anderen Lagermittel auf der anderen Seite des Tellerrads angeordnet. Es ist günstig, wenn zumindest eines der ersten und zweiten Lagermittel auf derjenigen Seite des Tellerrades angeordnet ist, die der zweiten Drehachse abgewandt ist.

Die Kupplung ermöglicht ein An- bzw. Abkoppeln des im Drehmomentfluß dahinterliegenden Winkeltriebs, was sich wiederum günstig auf Verlustleistungen auswirkt. Dabei ist das Kupplungseingangsteil mit der Eingangswelle antriebsverbunden, während das Kupplungsausgangsteil mit der Zwischenwelle antriebsverbunden ist. Mit der Erfindung wird insgesamt eine Winkeltriebanordnung zur Verfügung gestellt, die zum einen eine Abschaltung des Winkeltriebs und der Längsantriebswelle ermöglicht, was sich letzten Endes günstig auf den Kraftstoffverbrauch des Kraftfahrzeugs auswirkt, und die zum anderen aufgrund des kompakten Aufbaus gut in Antriebskonzepte mit quer eingebautem Motor integrierbar ist. Die Schaltkupplung ist nach einer bevorzugten Ausgestaltung extern ansteuerbar. Die Ansteuerung erfolgt vorzugsweise mittels einer elektronischen Regeleinheit, insbesondere nach Bedarf in Abhängigkeit von der Fahrdynamik des Kraftfahrzeugs.

Gemäß der Erfindung ist vorgesehen, daß die ersten und zweiten Lagermittel in Bezug auf das Tellerrad auf einer gemeinsamen Seite angeordnet sind. Dies ist für die radialen Bauraumverhältnisse im Bereich der Kupplung besonders günstig, da hier keine zusätzlichen Lagermittel erforderlich sind. Bei dieser Ausführungsform sind die ersten Lagermittel vorzugsweise axial benachbart zum Tellerrad angeordnet und die zweiten Lagermittel sind in einem Endabschnitt der Zwischenwelle angeordnet. Auf diese Weise wird eine gute Abstützung von auf die Zwischenwelle aufgrund der Drehmomentübertragung zwischen dem Tellerrad und dem Ritzel einwirkenden Kippmomente erreicht. Besonders günstig ist die Verwendung von Wälzlagern, insbesondere von Kegelrollenlagern als ersten und zweiten Lagermitteln, wobei andere Lagermittel, wie Gleitlager nicht ausgeschlossen sind. Bei Verwendung von Kegelrollenlager sind diese für eine gute Abstützung von Kippmomenten vorzugsweise in O-Anordnung eingebaut. Mit O-Anordnung ist gemeint, daß die zwischen dem Lagerinnenring und dem Lageraußenring der ersten und zweiten Lagermittel wirkenden Kraftwirkungslinien im Längsschnitt betrachtet etwa O-förmig verlaufen.

Nach einer nicht erfindungsgemäßen zweiten Ausführungsform sind die ersten Lagermittel axial zwischen dem Kupplungsausgangsteil und dem Tellerrad angeordnet und die zweiten Lagermittel sind in Bezug auf das Tellerrad auf der den ersten Lagermitteln entgegengesetzten Seite angeordnet. Dies bietet den Vorteil einer nochmals verbesserten Abstützung von Kippmomenten. Außerdem hat die so gestaltete Winkeltriebanordnung eine kurze axiale Baulänge, da lediglich ein Lagermittel auf der dem Tellerrad abgewandten Seite unterzubringen ist. Vorzugsweise hat das Gehäuse - im Schnitt durch die erste und zweite Drehachse betrachtet - einen Steg, in dem die ersten Lagermittel aufgenommen sind. Hiermit wird eine gute Krafteinleitung von den auf das Tellerrad bzw. der Zwischenwelle wirkenden Kräften in das Gehäuse gewährleistet. Bei der genannten zweiten Ausführungsform sind die ersten und zweiten Lagermittel vorzugsweise in Form von Kegelrollenlagern gestaltet, die insbesondere in X-Anordnung eingebaut sind. Mit X-Anordnung ist gemeint, daß die zwischen dem Lagerinnenring und dem Lageraußenring der ersten und zweiten Lagermittel wirkenden Kraftwirkungslinien im Längsschnitt betrachtet etwa X-förmig verlaufen. Es versteht sich, daß auch andere Lagermittel, wie Gleitlager, oder andere Formen von Wälzlagern zum Einsatz kommen können.

Für beide der genannten Ausführungsformen gilt, daß die Zwischenwelle unmittelbar in dem Gehäuse drehbar gelagert sein kann. Alternativ hierzu kann die Zwischenwelle auch mittelbar in dem Gehäuse gelagert sein, und zwar über eine mit dem Gehäuse fest verbundene Lagerbuchse. Hierbei ist insbesondere vorgesehen, daß die Zwischenwelle samt Tellerrad, die ersten und zweiten Lagermittel und die Lagerbuchse eine vormontierte Baueinheit bilden. Diese vormontierte Baueinheit wird in eine entsprechende seitliche Öffnung des Gehäuses eingeschoben und fest mit diesem verbunden, beispielsweise mittels Schraubverbindungen.

Das Gehäuse umfaßt vorzugsweise zwei Halbschalen, die in einer zur ersten Drehachse parallelen Ebene zusammengefügt sind. Dies schließt die Möglichkeit mit ein, daß die Trennebene die erste Drehachse beinhaltet. Zur Verbindung können übliche Verbindungsmittel, wie Schrauben verwendet werden. Die Ausgestaltung des Gehäuses aus zwei Halbschalen mit zur ersten Drehachse paralleler Trennebene bietet den Vorteil eines besonders kompakten radialen Bauraums. Ein den Bauraum radial vergrößernder Flansch in einer Querebene ist nicht erforderlich. Vorzugsweise ist die Trennebene in Seitenansicht auf die Winkeltriebanordnung so gelegt, daß ein zwischen der Trennebene und der zweiten Drehachse eingeschlossener Winkel zwischen 45° und 90° beträgt. Hiermit ergibt sich ein besonders kompakter Aufbau der Winkeltriebanordnung, so daß diese sich einfach in bestehende Bauraumverhältnisse von Kraftfahrzeugen mit quer eingebautem Motor integrieren läßt.

In einer bevorzugten Ausgestaltung weist das Gehäuse einen Hülsenansatz auf, in dem das Ritzel koaxial zur zweiten Drehachse drehbar gelagert ist. Dabei gilt, daß das Ritzel mittels dritter und vierter Lagermittel drehbar gelagert ist. Die dritten und vierten Lagermittel sind vorzugsweise als Kegelrollenlager gestaltet, die insbesondere in O-Anordnung angeordnet sind. Andere Lagermittel sind, wie oben bereits gesagt, jedoch nicht ausgeschlossen. Auch hinsichtlich der Lagerung des Ritzels bzw. der Ritzelwelle gilt, daß diese nach einer ersten Möglichkeit unmittelbar in dem Gehäuse gelagert werden kann oder, alternativ hierzu, in einer entsprechenden Lagerbuchse, welche mit dem Gehäuse fest zu verbinden ist. Bei der letztgenannten Ausführungsform bilden die Ritzelwelle, die dritten und vierten Lagermittel und die Lagerbuchse eine vormontierte Baueinheit, welche in eine entsprechende zur zweiten Drehachse koaxiale Öffnung des Gehäuses eingeschoben und mit diesem befestigt wird.

Nach einer bevorzugten Ausgestaltung, die für alle der vorgenannten Ausführungsformen gilt, weist die Schaltkupplung Formschlußmittel zur Übertragung eines Drehmoments vom Kupplungseingangsteil auf das Kupplungsausgangsteil auf. Unter Schaltkupplung wird in diesem Zusammenhang eine Kupplung verstanden, welche das Trennen und Verbinden der Drehmomentübertragung zwischen der Eingangswelle und der Ausgangswelle der Winkeltriebanordnung ermöglicht. Mit Formschlußmittel ist gemeint, daß die Drehmomentübertragung zwischen dem Kupplungseingangsteil und dem Kupplungsausgangsteil durch formschlüssiges Ineinandergreifen der genannten Teile erfolgt. Als Beispiele für formschlüssige Schaltkupplungen seien hier Zahnkupplungen oder Klauenkupplungen genannt. Nach einer möglichen Weiterbildung kann die Schaltkupplung eine Synchronisiervorrichtung zur Synchronisierung der Drehzahl zwischen dem Kupplungseingangsteil und dem Kupplungsausgangsteil aufweisen. Durch das Angleichen der Drehzahlen der Kupplungsteile vor dem Schalten wird der eigentliche Schaltvorgang "weicher", das heißt, es entstehen keine ungewünschten Schaltgeräusche. Die Synchronisiervorrichtung kann beispielsweise eine Reibkupplung oder eine insbesondere konische Reibflächenpaarung umfassen.

Bevorzugte Ausführungsbeispiele der Erfindung werden nachstehend anhand der Zeichnungsfiguren erläutert. Hierin zeigt
- Figur 1: eine erfindungsgemäße Winkeltriebanordnung in einer ersten Ausführungsform im Schnitt durch die Eingangswelle und die Ausgangswelle;
- Figur 2: die Winkeltriebanordnung gemäß Figur 1 in perspektivischer Ansicht;
- Figur 3: eine erfindungsgemäße Winkeltriebanordnung in einer zweiten Ausführungsform im Schnitt durch die Eingangswelle und die Ausgangswelle;
- Figur 4: eine nicht erfindungsgemäße Winkeltriebanordnung im Schnitt durch die Eingangswelle und die Ausgangswelle;
- Figur 5: eine weitere nicht erfindungsgemäße Winkeltriebanordnung im Schnitt durch die Eingangswelle und die Ausgangswelle; und
- Figur 6: die Winkeltriebanordnung gemäß Figur 5 in Axialansicht.

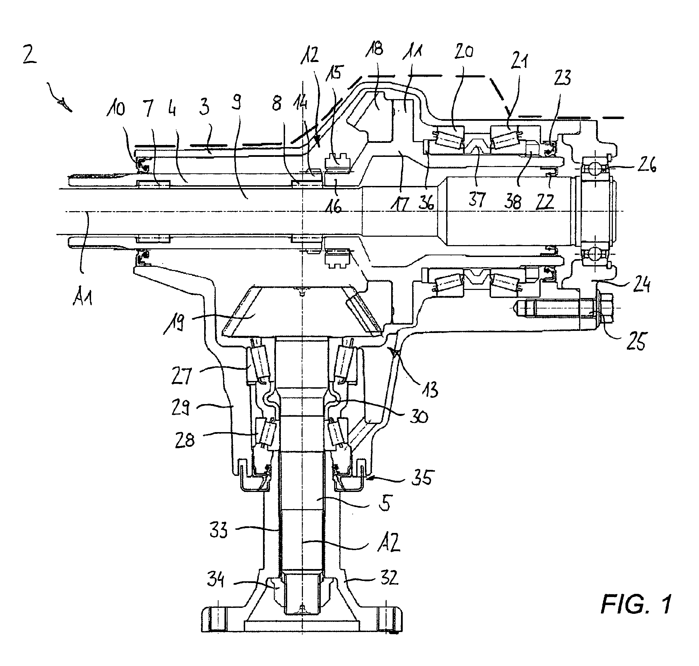

Die Figuren 1 bis 6 werden nachstehend zunächst gemeinsam beschrieben. Die Winkeltriebanordnung 2 umfaßt ein Gehäuse 3, eine Eingangswelle 4, die in dem Gehäuse 3 um eine erste Drehachse A1 drehbar gelagert ist, sowie eine Ausgangswelle 5, die in dem Gehäuse 3 um eine zweite Drehachse A2 drehbar gelagert ist. Die zweite Drehachse A2 kreuzt die erste Drehachse A1 mit Abstand in rechtem Winkel. Das Gehäuse 3 weist einen hier nicht dargestellten Anschlußflansch auf, mit dem die Winkeltriebanordnung an einem stehenden Bauteil, insbesondere an einem Differentialgetriebe, oder an einem Motorbauteil angeschraubt werden kann. Die Eingangswelle 4 ist in Form einer Hohlwelle gestaltet und weist an ihrem freien Ende eine Wellenverzahnung zur drehfesten Verbindung mit einem hier nicht dargestellten Antriebsbauteil, insbesondere dem Differentialkorb des Differentialgetriebes, auf.

Es ist ersichtlich, daß die Eingangswelle 4 über zwei Lager 7, 8 auf einer Seitenwelle 9 um die Drehachse A1 drehbar gelagert ist. Die Seitenwelle 9 ist zur Übertragung eines Drehmoments drehfest mit einem der beiden Seitenwellenräder des Differentialgetriebes verbunden. Es versteht sich, daß die Eingangswelle 4 auch gegenüber dem Getriebegehäuse 3 drehbar gelagert werden könnte. Der zwischen dem Gehäuse 3 und der Eingangswelle 4 gebildete Ringraum ist mittels einer Dichtung 10, insbesondere einem Radialwellendichtring, abgedichtet. Die Seitenwelle 9 ist durch die als Hohlwelle gestaltete Eingangswelle 4 und die als Hohlwelle gestaltete Zwischenwelle 17 hindurchgeführt. Das heißt, Seitenwelle 9, Eingangswelle 4 und Zwischenwelle 17 sind koaxial zueinander bzw. zur Drehachse A angeordnet.

Die Winkeltriebanordnung umfaßt ferner eine Kupplung 12 sowie einen der Kupplung 12 im Drehmomentfluß nachgeschalteten Winkeltrieb 13. Als Kupplung 12 kann prinzipiell jede Form von Kupplung zum Einsatz kommen, welche das Verbinden und Trennen des Drehmomentflusses zwischen der Eingangswelle 4 und der Ausgangswelle 5 ermöglicht. Besonders günstig ist der Einsatz einer formschlüssigen Schaltkupplung, da diese einen relativ geringen Bauraum einnehmen. Unter formschlüssiger Schaltkupplung wird in diesem Zusammenhang eine Kupplung verstanden, bei der die Drehmomentübertragung durch formschlüssiges Ineinandergreifen der beiden Kupplungsteile erfolgt. Beispiele für formschlüssig arbeitende Kupplungen sind Klauenkupplungen oder Zahnkupplungen. Vorliegend ist die Kupplung in Form einer Zahnkupplung gestaltet, die am Kupplungseingangsteil 14 eine erste Verzahnung aufweist, welche mittels einer Schaltmuffe 15 zur Übertragung eines Drehmoments drehfest mit einer entsprechenden zweiten Verzahnung am Kupplungsausgangsteil 16 verbunden werden kann. Das Öffnen bzw. Schließen der Kupplung 12 erfolgt durch axiales Verschieben der Schaltmuffe 15.

In einer baulichen Abwandlung kann die Kupplung 12 zusätzlich eine Synchronisiervorrichtung aufweisen, welche vor dem drehfesten Verbinden des Kupplungseingangsteils 14 mit dem Kupplungsausgangsteil 16 eine Angleichung der Drehzahlen zwischen beiden Bauteilen ermöglicht. Nach dem Synchronisieren des Kupplungseingangsteils 14 mit dem Kupplungsausgangsteil 16 findet dann der Schaltvorgang statt. Die Ansteuerung der Kupplung 12 erfolgt nach Bedarf in Abhängigkeit von der Fahrdynamik des Kraftfahrzeugs mittels einer elektronischen Regeleinheit.

Es ist ersichtlich, daß das Kupplungseingangsteil 14 einteilig mit der Eingangswelle 4 der Winkeltriebanordnung 2 ausgebildet ist. Das Kupplungsausgangsteils 16 ist fest mit einer Zwischenwelle 17 verbunden, wobei das Kupplungsausgangsteil 16 und die Zwischenwelle 17 vorzugsweise einteilig gestaltet sind. Die Zwischenwelle 17 ist als Hohlwelle gestaltet und weist einen Flansch 11 auf, an dem das Tellerrad 18 des Winkeltriebs 13 befestigt ist, beispielsweise mittels Schraubverbindung oder Schweißen. Die Zwischenwelle 17 ist mittels erster und zweiter Lagermittel 20, 21 koaxial zur Drehachse A1 in dem Gehäuse 3 drehbar gelagert. Der zwischen der Zwischenwelle 17 und der Seitenwelle 9 gebildete Ringraum ist mittels einer Dichtung 22 abgedichtet, wobei die Dichtung 22 insbesondere in Form eines Radialwellendichtringes gestaltet ist. Der zwischen der Zwischenwelle 17 und dem Gehäuse 3 gebildete Ringraum ist ebenfalls mittels einer Dichtung 23, die insbesondere in Form eines Radialwellendichtringes gestaltet ist, abgedichtet.

Der Winkeltrieb 13 umfaßt neben dem Tellerrad 18 weiter ein Ritzel 19, das mit dem Tellerrad 18 im Verzahnungseingriff ist. Das Ritzel 19 und das Tellerrad 18 haben jeweils eine kegelige bzw. konische Verzahnung. Das Ritzel 19 ist fest mit der Ausgangswelle 5 verbunden, beispielsweise mittels Schweißen. Es ist jedoch ebenso denkbar, daß das Ritzel 19 und die Ausgangswelle 5 einteilig als Ritzelwelle ausgebildet sind. Die Ausgangswelle 5 ist mittels dritter und vierter Lagermittel 27, 28 zumindest mittelbar in einem Hülsenansatz 29 des Gehäuses 3 um die Drehachse A2 drehbar gelagert. Die dritten und vierten Lagermittel 27, 28 können prinzipiell beliebig gestaltet sein. Besonders günstig ist die Verwendung von Kegelrollenlagern, die vorliegend in O-Anordnung angeordnet sind. Durch die O-Anordnung wird eine gute Abstützung von auf die Ritzelwelle wirkenden Kippmomenten erreicht. Zwischen den Lagerinnen-ringen der beiden Lager 27, 28 ist eine Hülse 30 zur Lagervorspannung vorgesehen.

Zur Drehmomentübertragung von der Ausgangswelle 5 auf die nicht dargestellte Längsantriebswelle des Kraftfahrzeugs ist ein Anschlußflansch 32 vorgesehen, der mittels einer Wellenverzahnung 33 drehfest mit der Ausgangswelle 5 verbunden ist. Zum axialen Verspannen des Anschlußflansches 32 mit der Ausgangswelle 5 und zum gleichzeitigen axialen Vorspannen der Lager 27, 28 ist eine Verschraubungsmutter 34 vorgesehen, welche auf ein freies Ende der Ausgangswelle 5 aufgeschraubt wird und sich gegen eine radiale Schulter des Anschlußflansches 32 abstützt. Der Anschlußflansch 32 wiederum stützt sich axial gegen den Lagerinnenring des vierten Lagers 28 axial ab. Der zwischen der Ausgangswelle 5 bzw. dem Anschlußflansch 32 einerseits und dem Gehäuse 3 andererseits gebildete Ringraum ist mittels Dichtmitteln 35 gegen Eindringen von Schmutz bzw. Auslaufen von Schmiermittel abgedichtet. Die Dichtmittel 35 umfassen eine berührungslose Dichtung sowie eine berührende Weichdichtung.

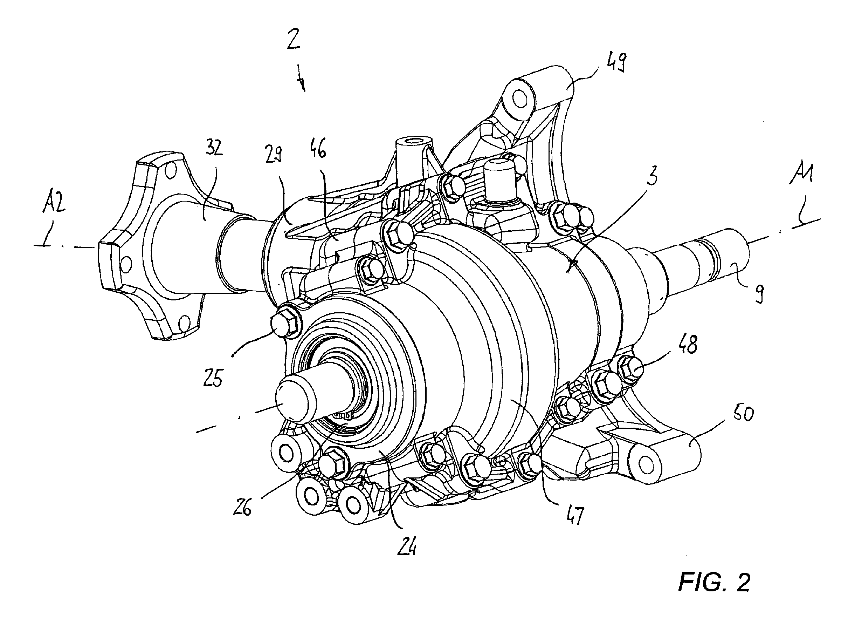

Es ist insbesondere in Figur 2 erkennbar, daß das Gehäuse 3 aus zwei Halbschalen 46, 47 besteht, wobei die Trennebene E die erste Drehachse A1 beinhaltet. Die Trennebene E schließt mit der zweiten Drehachse A2 einen Winkel α ein, der vorzugsweise zwischen 45° und 90° liegt, und insbesondere etwa 70° ± 10° beträgt. Auf diese Weise ist der in Richtung Motor beanspruchte Bauraum sehr gering. Die beiden Halbschalen 46, 47 sind vorzugsweise mittels Schrauben 48 miteinander verbunden, wobei andere Verbindungsmittel, wie Schweißen nicht ausgeschlossen sind. Es sind weitere Anschlußflansche 49, 50 erkennbar, die zum Verschrauben des Gehäuses 3 mit einem stehenden Bauteil, insbesondere dem Gehäuse des Differentialgetriebes dienen.

Die gemeinsame Besonderheit von allen gezeigten Ausführungsformen besteht darin, daß die ersten und zweiten Lagermittel 20, 21, die zur Lagerung der Zwischenwelle 17 um die Drehachse A1 dienen, in Bezug auf die Drehachse A2 auf einer gemeinsamen Seite angeordnet sind. Es ist ferner erkennbar, daß die Schaltkupplung 12 und zumindest eines der beiden ersten und zweiten Lagermittel 20, 21 auf unterschiedlichen Seiten des Tellerrads 18 angeordnet sind. Dabei ist zumindest eines der beiden ersten und zweiten Lagermittel 20, 21 auf derjenigen Seite des Tellerrades 18 angeordnet, die der zweiten Drehachse A2 abgewandt ist bzw. auf der Seite, in deren Richtung der Konuswinkel der Verzahnung des Tellerrads 18 sich öffnet.

Durch die genannten Merkmale ergibt sich im Bereich der Kupplung 12 ein kompakter Aufbau, was sich günstig auf den benötigten Bauraum und damit die Integration in bestehende Bauraumverhältnisse auswirkt.

Im folgenden werden die sich unterscheidenden Merkmale der einzelnen Ausführungsformen erläutert.

Bei der Ausführungsform gemäß Figur 1 bzw. Figur 2 befinden sich sowohl die ersten Lagermittel 20 als auch die zweiten Lagermittel 21 auf einer gemeinsamen Seite in Bezug auf eine Ebene, welche durch das Tellerrad 18 aufgespannt wird. Die Kupplung 12 und die beiden Lagermittel 20, 21 sind auf unterschiedlichen Seiten des Tellerrads 18 angeordnet. Die ersten und zweiten Lagermittel 20, 21 sind prinzipiell beliebig. Besonders günstig für eine gute Abstützung von Kippmomenten ist die Verwendung von Kegelrollenlagern, die vorzugsweise in O-Anordnung angeordnet sind. Es ist ersichtlich, daß der Lagerinnenring der ersten Lagermittel 20 gegen eine Schulter der Zwischenwelle 17 über einen Distanzring 36 axial abgestützt ist. Zur axialen Vorspannung der beiden Lagerinnenringe gegeneinander ist eine Hülse 37 vorgesehen, welche axial zwischen den beiden Lagerinnenringen einsitzt. Die axiale Vorspannung wird mittels einer Verschraubungsmutter 38 vorgenommen, welche auf ein entsprechendes Gewinde am Ende der Zwischenwelle 17 aufgeschraubt wird. Die Lageraußenringe der beiden Lagermittel 20, 21 sind axial gegenüber entsprechenden Schultern des Gehäuses 3 axial abgestützt.

Bei der vorliegenden Ausführungsform ist an dem dem Differentialgetriebe entgegengesetzten Ende des Gehäuses 3 ein Deckel 24 vorgesehen. Dabei kann der Deckel 24 insbesondere mittels Schraubverbindungen 25 mit dem Gehäuse 3 verbunden werden. Die Seitenwelle 9 ist an ihrem dem Differentialgetriebe entgegengesetzten Ende mittels eines Lagers 26 in dem Deckel 24 koaxial zur Drehachse A1 drehbar gelagert. Die Ausgangswelle 5 ist unmittelbar in dem Hülsenansatz 29 des Getriebegehäuses 3 drehbar gelagert.

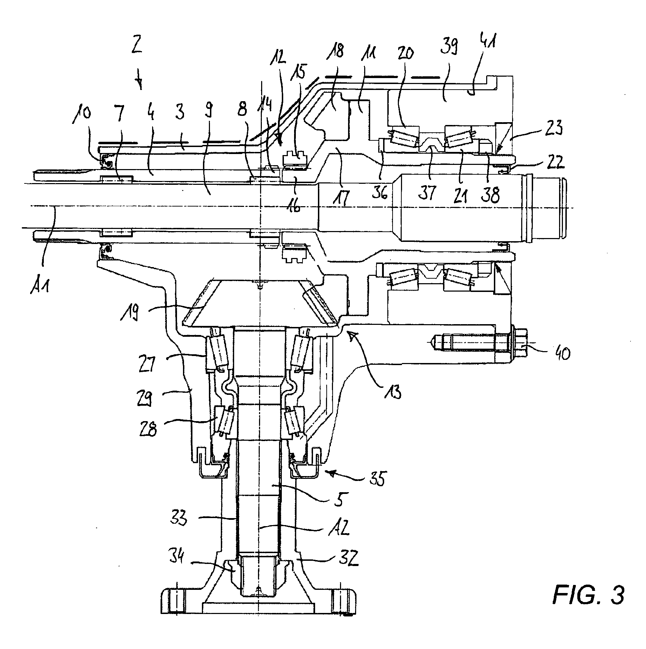

Die Ausführungsform gemäß Figur 3 entspricht weitestgehend derjenigen gemäß Figur 1 bzw. Figur 2, so daß hinsichtlich der Gemeinsamkeiten auf die obige Beschreibung Bezug genommen werden kann. Dabei sind gleiche bzw. einanderentsprechende Bauteile mit gleichen Bezugsziffern versehen.

Der einzige Unterschied besteht darin, daß die Zwischenwelle 17 in einer Buchse 39 mittels der ersten und zweiten Lagermittel 20, 21 drehbar gelagert ist. Dabei stellt die Baueinheit bestehend aus Zwischenwelle 17 mit Tellerrad 18, Distanzscheibe 36, ersten und zweiten Lagermitteln 20, 21 mit Distanzhülse 37 und Verschraubungsmutter 38 sowie der Buchse 39 eine Baueinheit dar. Diese Baueinheit wird in eine entsprechende seitliche Öffnung 41 des Gehäuses 3 eingeschoben. Dann wird die Buchse 39 erst mit dem Gehäuse 3 verbunden, vorzugsweise mittels mehrerer über den Umfang verteilter Schrauben 40.

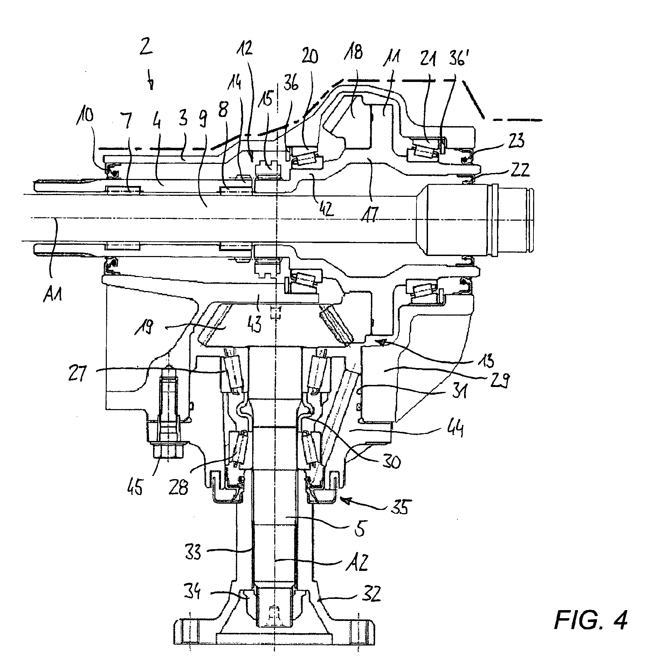

Figur 4 zeigt eine nicht erfindungsgemäße Winkeltriebanordnung Hinsichtlich der Gemeinsamkeiten mit den Ausführungsformen gemäß Figur 1 bzw. Figur 2 wird auf die obige Beschreibung Bezug genommen. Gleiche bzw. einander entsprechende Bauteile sind mit gleichen Bezugszeichen versehen.

Die Besonderheit der vorliegenden Ausführungsform besteht darin, daß die ersten und zweiten Lagermittel 20, 21 auf unterschiedlichen Seiten in Bezug auf das Tellerrad 18 angeordnet sind. Die ersten Lagermittel 20 und die Kupplung 12 sind auf derselben Seite in Bezug auf das Tellerrad 18 angeordnet, während die zweiten Lagermittel 21 auf der anderen Seite des Tellerrads 18 angeordnet sind, die auch als Rückseite bezeichnet werden kann. Dabei sind die ersten Lagermittel 20 axial zwischen dem Kupplungsausgangsteil 16 und dem Tellerrad 18 angeordnet, und zwar auf einem gestuften Abschnitt 42 der Zwischenwelle 17. Der Lageraußenring der ersten Lagermittel 20 ist gegen eine entsprechende Schulter des Gehäuses 3 abgestützt, wobei zwischen der Schulter und dem Lageraußenring eine Distanzscheibe 36 angeordnet ist. In dem zwischen der Seitenwelle 9 und dem Ritzel 19 liegenden Bereich hat das Gehäuse 3 einen Steg 43 zur Aufnahme der ersten Lagermittel 20. Die beiden Lagermittel 20, 21 sind in Form von Kegelrollenlagern ausgebildet, welche in X-Anordnung eingebaut sind. Da die beiden Lagermittel 20, 21 auf unterschiedlichen Seiten des Tellerrades 20 angeordnet sind, hat die vorliegende Winkeltriebanordnung 2 insgesamt eine kürzere axiale Baulänge. Ein Deckel an der dem Differential entgegengesetzten Seite der Winkeltriebanordnung ist bei der vorliegenden Ausführungsform nicht vorgesehen.

Ein weiterer Unterschied im Vergleich zur Ausführungsform gemäß Figur 1 besteht darin, daß die vorliegende Ausführungsform eine Buchse 44 aufweist, in der die Ausgangswelle 5 auf der Drehachse A2 drehbar gelagert ist. Dabei bilden die Bauteile Ritzel 19 mit Ausgangswelle 5, die dritten und vierten Lagermittel 27, 28 mit der dazwischenliegenden Hülse 30, der Anschlußflansch 32 mit Mutter 34 und die Buchse 44 eine Baueinheit, die vormontiert wird. Diese vormontierte Baueinheit wird dann in eine entsprechende Bohrung 31 koaxial zur Drehachse A2 eingeschoben. Dabei greift die Verzahnung des Ritzels 19 in die Gegenverzahnung des Tellerrades 18. Abschließend wird die Buchse 44 mit dem Gehäuse 4 fest verbunden, vorzugsweise mittels mehrerer über den Umfang verteilter Schrauben 45.

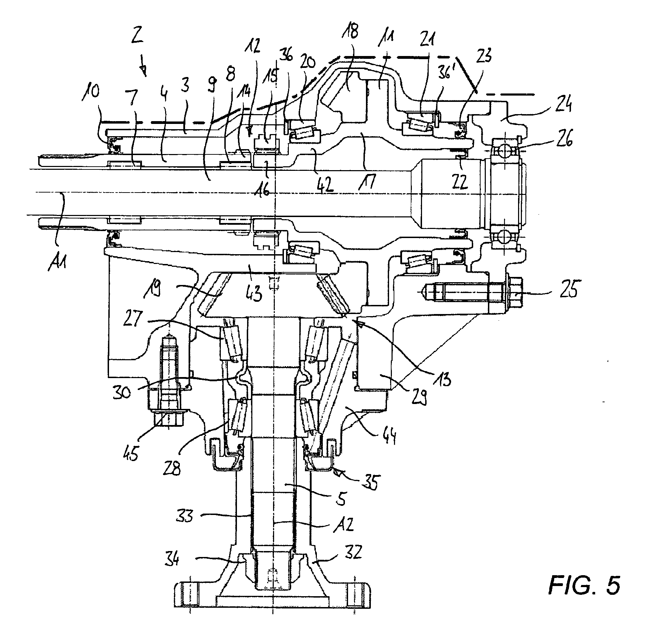

Figur 5 zeigt eine weitere nicht erfindungsgemäße Winkeltriebanordnung, die weitestgehend derjenigen aus Figur 4 entspricht. Insofern wird hinsichtlich der Gemeinsamkeiten auf die obige Beschreibung Bezug genommen. Gleiche bzw. einander entsprechende Bauteile sind mit gleichen Bezugszeichen versehen.

Der einzige Unterschied besteht darin, daß bei der vorliegenden Ausführungsform die dem Differentialgetriebe abgewandte Seite der Winkeltriebanordnung 2 mittels eines Deckels 24 geschlossen ist, wie auch bei der Ausführungsform nach Figur 1, auf deren Beschreibung hier ebenfalls verwiesen wird.

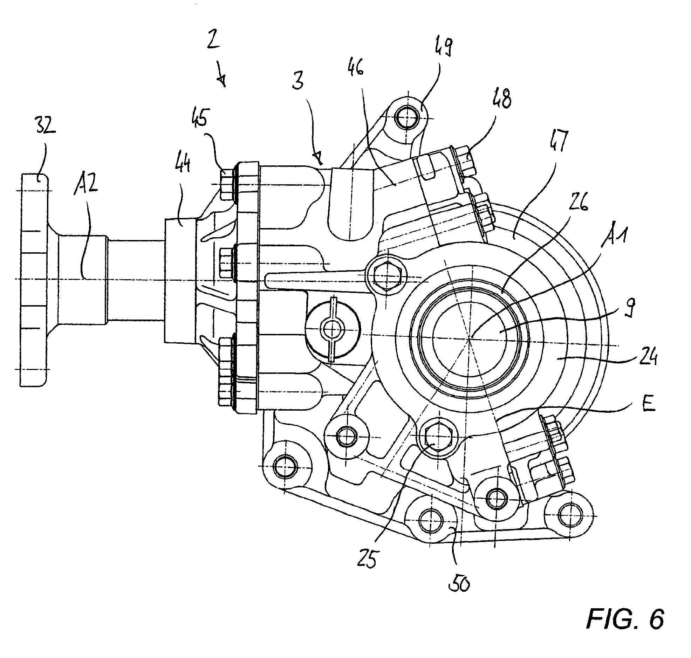

Figur 6 zeigt die Winkeltriebanordnung nach Figur 5 in Axialansicht. Hier ist erkennbar, daß die zweite Drehachse A2 die erste Drehachse A1 mit Abstand rechtwinklig kreuzt. Weiterhin ist die Buchse 44 erkennbar, welche an das Gehäuse 3 mittels Schrauben 45 angeschraubt ist.

**Bezugszeichenliste**

| | |
|---|---|
| 2 | Winkeltriebanordnung |
| 3 | Gehäuse |
| 4 | Eingangswelle |
| 5 | Ausgangswelle |
| 6 | Wellenverzahnung |
| 7 | Lager |
| 8 | Lager |
| 9 | Seitenwelle |
| 10 | Dichtung |
| 11 | Flansch |
| 12 | Kupplung |
| 13 | Winkeltrieb |
| 14 | Kupplungseingangsteil |
| 15 | Schaltmuffe |
| 16 | Kupplungsausgangsteil |
| 17 | Zwischenwelle |
| 18 | Tellerrad |
| 19 | Ritzel |
| 20 | erste Lagermittel |
| 21 | zweite Lagermittel |
| 22 | Dichtung |
| 23 | Dichtung |
| 24 | Deckel |
| 25 | Schraubverbindung |
| 26 | Lager |
| 27 | Lagermittel |
| 28 | Lagermittel |
| 29 | Hülsenansatz |
| 30 | Hülse |
| 31 | Bohrung |
| 32 | Anschlußflansch |
| 33 | Wellenverzahnung |
| 34 | Mutter |
| 35 | Dichtmittel |
| 36 | Distanzscheibe |
| 37 | Hülse |
| 38 | Mutter |
| 39 | Buchse |
| 40 | Schraubverbindung |
| 41 | Bohrung |
| 42 | Abschnitt |
| 43 | Steg |
| 44 | Buchse |
| 45 | Schrauben |
| 46 | Halbschale |
| 47 | Halbschale |
| 48 | Schraube |
| 49 | Anschlußflansch |
| 50 | Anschlußflansch |
| | |
| A1 | erste Drehachse |
| A2 | zweite Drehachse |
| E | Ebene |
| α | Winkel |

## Patentansprüche

1. Winkeltriebanordnung für den Antriebsstrang eines Kraftfahrzeugs mit einer permanent antreibbaren ersten Antriebsachse und einer zuschaltbaren zweiten Antriebsachse, umfassend
eine Seitenwelle (9) mit einer ersten Drehachse (A1);
eine Eingangswelle (4), die koaxial zur Seitenwelle (9) angeordnet ist und um die erste Drehachse (A1) drehend antreibbar ist;
eine Zwischenwelle (17), die mittels erster und zweiter Lagermittel (20, 21) um die erste Drehachse (A1) in einem Gehäuse (3) drehbar gelagert ist;
eine zur ersten Drehachse (A1) koaxial angeordnete Schaltkupplung (12) mit einem Kupplungseingangsteil (14), das mit der Eingangswelle (4) verbunden ist, und einem Kupplungsausgangsteil (16), das mit der Zwischenwelle (17) verbunden ist, wobei das Kupplungseingangsteil (14) und das Kupplungsausgangsteil (16) zur Übertragung eines Drehmoments auf die zweite Antriebsachse miteinander koppelbar sind;
ein Winkelgetriebe (13) mit einem Tellerrad (18), das mit der Zwischenwelle (17) fest verbunden ist und koaxial zur ersten Drehachse (A1) angeordnet ist, und einem Ritzel (19), das um eine zweite Drehachse (A2) drehbar gelagert ist und mit dem Tellerrad (18) in Verzahnungseingriff ist, wobei die zweite Drehachse (A2) rechtwinklig zur ersten Drehachse (A1) angeordnet ist;
wobei die ersten und zweiten Lagermittel (20, 21) in Bezug auf die zweite Drehachse (A2) und in Bezug auf das Tellerrad (18) auf einer gemeinsamen Seite angeordnet sind; und
wobei die Schaltkupplung (12) und zumindest eines der ersten und zweiten Lagermittel (20, 21) auf unterschiedlichen Seiten des Tellerrads (18) angeordnet sind,

2. Winkeltriebanordnung nach Anspruch 1, **dadurch gekennzeichnet, daß** die ersten und zweiten Lagermittel (20, 21) in einer Lagerbuchse (39) aufgenommen sind, die in das Gehäuse (3) eingesteckt und mit diesem fest verbunden ist.

3. Winkeltriebanordnung nach Anspruch 2, **dadurch gekennzeichnet, daß** die Zwischenwelle (17), die ersten und zweiten Lagermittel (20, 21) und die Lagerbuchse (39) eine vormontierte Baueinheit bilden.

4. Winkeltriebanordnung nach einem der Ansprüche 1 bis 3, **dadurch gekennzeichnet, daß** die ersten und zweiten Lagermittel (20, 21) als Kegelrollenlager gestaltet sind, die insbesondere in O-Anordnung angeordnet sind.

5. Winkeltriebanordnung nach einem der Ansprüche 1 bis 4, **dadurch gekennzeichnet, daß** das Gehäuse (3) zwei Halbschalen (46, 47) aufweist, die in einer Ebene (E) zusammengefügt sind, welche zur ersten Drehachse (A1) parallel verläuft oder die erste Drehachse (A1) enthält.

6. Winkeltriebanordnung nach Anspruch 5, **dadurch gekennzeichnet, daß** ein zwischen der Ebene (E) und der zweiten Drehachse (A2) eingeschlossener Winkel zwischen 45° und 90° beträgt.

7. Winkeltriebanordnung nach einem der Ansprüche 1 bis 6, **dadurch gekennzeichnet, daß** das Gehäuse (3) einen Hülsenansatz (29) aufweist, in dem das Ritzel (19) drehbar gelagert ist.

8. Winkeltriebanordnung nach einem der Ansprüche 1 bis 7, **dadurch gekennzeichnet, daß** das Gehäuse (3) - im Längsschnitt betrachtet - einen Steg (43) aufweist, in dem die ersten Lagermittel (20) aufgenommen sind.

9. Winkeltriebanordnung nach einem der Ansprüche 1 bis 8, **dadurch gekennzeichnet, daß** das Ritzel (19) mittels dritter und vierter Lagermittel (27, 28) auf der zweiten Drehachse (A2) drehbar gelagert ist.

10. Winkeltriebanordnung nach Anspruch 9, **dadurch gekennzeichnet, daß** die dritten und vierten Lagermittel (27, 28) als Kegelrollenlager gestaltet sind, die insbesondere in O-Anordnung angeordnet sind.

11. Winkeltriebanordnung nach einem der Ansprüche 9 oder 10, **dadurch gekennzeichnet, daß** die dritten und vierten Lagermittel (27, 28) in einer Lagerbuchse (44) aufgenommen sind, die in das Gehäuse (3) eingesteckt und mit diesem fest verbunden ist.

12. Winkeltriebanordnung nach Anspruch 11, **dadurch gekennzeichnet, daß** das Ritzel (19), die dritten und vierten Lagermittel (27, 28) und die Lagerbuchse (44) eine vormontierte Baueinheit bilden.

13. Winkeltriebanordnung nach einem der Ansprüche 1 bis 12, **dadurch gekennzeichnet, daß** die Schaltkupplung (12) Formschlußmittel zur Übertragung eines Drehmoments vom Kupplungseingangsteil (14) auf das Kupplungsausgangsteil (16) aufweist.

14. Winkeltriebanordnung nach einem der Ansprüche 1 bis 13, **dadurch gekennzeichnet, daß** die Schaltkupplung (12) eine Synchronisiervorrichtung zur Synchronisierung der Drehzahl zwischen dem Kupplungseingangsteil (14) und dem Kupplungsausgangsteil (16) vor dem Schalten aufweist.

15. Winkeltriebanordnung nach einem der Ansprüche 1 bis 14, **dadurch gekennzeichnet, daß** zumindest eines der ersten und zweiten Lagermittel (20, 21) auf einer Seite des Tellerrades (18) angeordnet ist, die der zweiten Drehachse (A2) abgewandt ist.

## Claims

1. An angle drive assembly for the driveline of a motor vehicle with a permanently drivable first driving axle and a connectable second driving axle, comprising
a sideshaft (9) with a first axis of rotation (A1);
an input shaft (4) which is arranged coaxially relative to the sideshaft (9) and which is rotatably drivable around the first axis of rotation (A1);
an intermediate shaft (17) which, by first and second bearing means (20, 21), is supported in a housing (3) so as to be rotatable around the first axis of rotation (A1);
a clutch (12) which is arranged coaxially relative to the first axis of rotation (A1) and comprises a clutch input part (14) which is connected to the input shaft (4), and which comprises a clutch output part (16) which is connected to the intermediate shaft (17), wherein the clutch input part (14) and the clutch output part (16) can be coupled to one another for transmitting torque to the second driving axle;
an angle drive (13) with a ring gear (18) which is firmly connected to the intermediate shaft (17) and which is arranged coaxially relative to the first axis of rotation (A1), and with a pinion (19) which is supported so as to be rotatable around a second axis of rotation (A2) and which engages the ring gear (18), wherein the second axis of rotation (A2) is arranged at a right angle relative to the first axis of rotation (A1);
wherein, with reference to the second axis of rotation (A2) and with reference to the ring gear (18), the first and the second bearing means (20, 21) are arranged on the same side, and
wherein the clutch (12) and at least one of the first and second bearing means (20, 21) are arranged on different sides of the ring gear (18).

2. An angle drive assembly according to claim 1, **characterised in that** the first and the second bearing means (20, 21) are received in a bearing bushing (39) which is inserted into the housing (3) and is firmly connected thereto.

3. An angle drive assembly according to claim 2, **characterised in that** the intermediate shaft (17), the first and the second bearing means (20, 21) and the bearing bushing (39) form a pre-assembled unit.

4. An angle drive assembly according to any one of claims 1 to 3, **characterised in that** the first and the second bearing means (20, 21) are provided in form of tapered roller bearings which, more particularly, are configured in an O-arrangement.

5. An angle drive assembly according to any one of claims 1 to 4, **characterised in that** the housing (3) comprises two semi-shells (46, 47) which are joined in a plane (E) which extends parallel to the first axis of rotation (A1) or which contains the first axis of rotation (A1).

6. An angle drive assembly according to claim 5, **characterised in that** an angle enclosed between the plane (E) and the second axis of rotation (A2) ranges between 45° and 90°.

7. An angle drive assembly according to any one of claims 1 to 6, **characterised in that** the housing (3) comprises a sleeve projection (29) in which the pinion (19) is rotatably supported.

8. An angle drive assembly according to any one of claims 1 to 7, **characterised in that** the housing (3) - if viewed in a longitudinal section - comprises a web (43) in which there are received the first bearing means (20).

9. An angle drive assembly according to any one of claims 1 to 8, **characterised in that** the pinion (19) is rotatably supported by third and fourth bearing means (27, 28) on the second axis of rotation (A2).

10. An angle drive assembly according to claim 9, **characterised in that** the third and fourth bearing means (27, 28) are provided in the form of tapered roller bearings which, more particularly, are configured in an O-arrangement.

11. An angle drive assembly according to any claim 9 or 10, **characterised in that** the third and fourth bearing means (27, 28) are received in a bearing bushing (44) which is inserted into the housing (3) and firmly connected thereto.

12. An angle drive assembly according to claim 11, **characterised in that** the pinion (19), the third and fourth bearing means (27, 28) and the bearing bushing (44) form a pre-assembled unit.

13. An angle drive assembly according to any one of claims 1 to 12, **characterised in that** the clutch (12) comprises form-engaging means for transmitting torque from the clutch input part (14) to the clutch output part (16).

14. An angle drive assembly according to any one of claims 1 to 13, **characterised in that** the clutch (12) comprises a synchronising device for synchronising the speed between the clutch input part (14) and the clutch output part (16) prior to the gear changing operation.

15. An angle drive assembly according to any one of claims 1 to 14, **characterised in that** at least one of the first and second bearing means (20, 21) is arranged on one side of the ring gear (18), which side faces away from the second axis of rotation (A2).

## Revendications

1. Agencement de transmission à renvoi d'angle pour la ligne de transmission d'un véhicule automobile avec un premier essieu moteur, qui peut être entraîné en permanence, et un deuxième essieu moteur susceptible d'être mis en service de manière sélective, l'agencement comprenant
un arbre latéral de roue (9) avec un premier axe de rotation (A1) ;
un arbre d'entrée (4), qui est agencé coaxialement à l'arbre latéral de roue (9) et peut être entraîné en rotation autour du premier axe de rotation (A1) ;
un arbre intermédiaire (17), qui est monté en rotation autour du premier axe de rotation (A1) dans un carter (3), à l'aide de premiers et deuxièmes moyens de palier (20, 21) ;
un embrayage de commande (12) agencé coaxialement au premier axe de rotation (A1) et comprenant une partie d'entrée d'embrayage (14), qui est reliée à l'arbre d'entrée (4), et une partie de sortie d'embrayage (16), qui est reliée à l'arbre intermédiaire (17), la partie d'entrée d'embrayage (14) et la partie de sortie d'embrayage (16) pouvant être couplées mutuellement pour la transmission d'un couple au deuxième essieu moteur ; une transmission à renvoi d'angle (13) comprenant une couronne (18), qui est reliée de manière fixe à l'arbre intermédiaire (17) et est agencée coaxialement au premier axe de rotation (A1), et un pignon (19), qui est monté en rotation autour d'un deuxième axe de rotation (A2) et est en prise de denture avec la couronne (18), le deuxième axe de rotation (A2) étant agencé à angle droit par rapport au premier axe de rotation (A1) ; agencement dans lequel les premiers et deuxièmes moyens de palier (20, 21) sont agencés sur un côté commun par rapport au deuxième axe de rotation (A2) et par rapport à la couronne (18) ; et
dans lequel l'embrayage de commande (12) et au moins l'un des premiers et deuxièmes moyens de palier (20, 21) sont agencés sur des côtés différents de la couronne (18).

2. Agencement de transmission à renvoi d'angle selon la revendication 1, **caractérisé en ce que** les premiers et deuxièmes moyens de palier (20, 21) sont logés dans un fourreau de palier (39), qui est inséré dans le carter (3) et est relié à celui-ci de manière fixe.

3. Agencement de transmission à renvoi d'angle selon la revendication 2, **caractérisé en ce que** l'arbre intermédiaire (17), les premiers et deuxièmes moyens de palier (20, 21) et le fourreau de palier (39) forment un module pré-monté.

4. Agencement de transmission à renvoi d'angle selon l'une des revendications 1 à 3, **caractérisé en ce que** les premiers et deuxièmes moyens de palier (20, 21) sont configurés sous la forme de roulements à rouleaux coniques, qui sont notamment agencés selon un montage en "O".

5. Agencement de transmission à renvoi d'angle selon l'une des revendications 1 à 4, **caractérisé en ce que** le carter (3) présente deux demi-coques (46, 47), qui sont assemblées dans un plan (E), qui s'étend parallèlement au premier axe de rotation (A1) ou renferme le premier axe de rotation (A1).

6. Agencement de transmission à renvoi d'angle selon la revendication 5, **caractérisé en ce qu'**un angle, formé entre le plan (E) et le deuxième axe de rotation (A2), présente une valeur comprise entre 45° et 90°.

7. Agencement de transmission à renvoi d'angle selon l'une des revendications 1 à 6, **caractérisé en ce que** le carter (3) présente un appendice en forme de fourreau (29) dans lequel est monté en rotation le pignon (19).

8. Agencement de transmission à renvoi d'angle selon l'une des revendications 1 à 7, **caractérisé en ce que** le carter (3) présente, vu en coupe longitudinale, une nervure (43) dans laquelle sont logés les premiers moyens de palier (20).

9. Agencement de transmission à renvoi d'angle selon l'une des revendications 1 à 8, **caractérisé en ce que** le pignon (19) est monté en rotation sur le deuxième axe de rotation (A2), à l'aide de troisièmes et quatrièmes moyens de palier (27, 28).

10. Agencement de transmission à renvoi d'angle selon la revendication 9, **caractérisé en ce que** les troisièmes et quatrièmes moyens de palier (27, 28) sont configurés sous la forme de roulements à rouleaux coniques, qui sont notamment agencés selon un montage en "O".

11. Agencement de transmission à renvoi d'angle selon l'une des revendications 9 ou 10, **caractérisé en ce que** les troisièmes et quatrièmes moyens de palier (27, 28) sont logés dans un fourreau de palier (44), qui est inséré dans le carter (3) et est relié à celui-ci de manière fixe.

12. Agencement de transmission à renvoi d'angle selon la revendication 11, **caractérisé en ce que** le pignon (19), les troisièmes et quatrièmes moyens de palier (27, 28) et le fourreau de palier (44) forment un module pré-monté.

13. Agencement de transmission à renvoi d'angle selon l'une des revendications 1 à 12, **caractérisé en ce que** l'embrayage de commande (12) présente des moyens de liaison par complémentarité de formes ou à engagement mécanique positif, pour la transmission d'un couple de la partie d'entrée d'embrayage (14) à la partie de sortie d'embrayage (16).

14. Agencement de transmission à renvoi d'angle selon l'une des revendications 1 à 13, **caractérisé en ce que** l'embrayage de commande (12) présente un dispositif de synchronisation pour synchroniser la vitesse de rotation entre la partie d'entrée d'embrayage (14) et la partie de sortie d'embrayage (16), avant l'actionnement de commande.

15. Agencement de transmission à renvoi d'angle selon l'une des revendications 1 à 14, **caractérisé en ce qu'**au moins l'un des premiers et deuxièmes moyens de palier (20, 21) est agencé sur un côté de la couronne (18), qui n'est pas dirigé vers le deuxième axe de rotation (A2).
